# EUROPEAN PATENT SPECIFICATION

(11) **EP 3 187 354 B1**
(45) Date of publication and mention of the grant of the patent: **17.01.2018**
(21) Application number: 16171389.6
(22) Date of filing: 25.05.2016
(51) Int. Cl.: B60K 1/04, B62M 6/90, B62K 19/40

(54) **INSTALLATION STRUCTURE FOR LITHIUM-ION BATTERY BOX OF ELECTRIC VEHICLE**
INSTALLATIONSSTRUKTUR FÜR EINEN LITHIUM-IONEN-BATTERIEKASTEN EINES ELEKTROFAHRZEUGS
STRUCTURE D'INSTALLATION POUR BOÎTE DE BATTERIE LITHIUM-ION DE VÉHICULE ÉLECTRIQUE

(30) Priority: 04.01.2016 CN 201620016129 U
(43) Date of publication of application: 05.07.2017
(73) Proprietor: AIMA Technology Co., Ltd., PRC Tianjin (CN)
(72) Inventor: DUAN, Hua, TIANJIN (CN); WANG, Shiyong, TIANJIN (CN); LI, Zongyou, TIANJIN (CN); HU, Yinghua, TIANJIN (CN); WANG, Jing, TIANJIN (CN); TIAN, Wei, TIANJIN (CN)
(74) Representative: Dargiewicz, Joanna

(56) References cited:
- EP-A1- 1 982 909
- EP-A1- 2 653 371
- CN-A- 1 211 526
- DE-U1-202011 000 601
- DE-U1-202014 005 639
- US-A1- 2013 241 170

## Description

### TECHNICAL FIELD

The present invention belongs to the field of electric vehicle accessories, and particularly discloses an installation structure for a lithium-ion battery box of an electric vehicle.

### BACKGROUND

With the popularization and continuous development of electric vehicles, the requirements of people for the electric vehicles are higher and higher. The electric vehicles not only shall meet sensory and aesthetic needs of people from appearance, but also shall meet the use need of people from the functions and practicability. There are two existing installation manners for the lithium-ion battery of the electric vehicle. One is a front-mounted installation manner, and the other one is a rear-mounted installation manner. A battery box installed in a front-mounted installation manner is installed on an oblique beam of a frame generally, that is, an installation groove provided with a groove wall at the periphery is made in the oblique beam and the battery box internally holding lithium batteries is embedded in the installation groove. In order to enhance the stability of the frame, a cross beam is further arranged above the oblique beam generally, so that the cross beam, the oblique beam and a saddle vertical tube collectively form a subtriangular shape with stable performance. However, because the battery box can only be taken out by being lifted to be higher than the groove wall of the installation groove while being taken out from the installation groove, if the cross beam above the oblique beam is designed to be low, taking-out for the lithium batteries is influenced, and in addition, due to high dead weights of the lithium batteries, the lithium batteries are more inconvenient to take out; and if the cross beam is designed to be high, the aesthetics of the whole vehicle is influenced. The generic DE202011000601U1 discloses a frame for a pedal assisted bicycle, on which a battery is fastened.

### SUMMARY

The objective of the present invention is to provide an installation structure for a lithium-ion battery box of electric vehicle, which is scientific and reasonable in structural design, simple in structure, convenient in disassembly and assembly, beneficial to frame design, high in aesthetics, and capable of meeting the use needs of users.

The technical problems are solved by the present invention through the following technical solution:
An installation structure for a lithium-ion battery box of an electric vehicle comprises a battery box body and a frame oblique beam, wherein the box body is composed of an upper cover, a lower cover, end covers and sidewalls; the upper cover and the lower cover are vertically arranged in parallel; the end covers are arranged at a left end and a right end of each of the upper cover and the lower cover; the sidewalls are arranged at a front end and a rear end of each of the upper cover and the lower cover; a jack is made in the end cover at the left end of the battery box body; an installation groove is made in the frame oblique beam; a bolt driven through a key is arranged at one side of the left end of the installation groove; and locking fixation between the battery box body and the frame oblique beam is realized by inserting the bolt into the jack. The installation structure for the lithium-ion battery box of the electric vehicle is characterized in that: an upwards-bulged arc-shaped limit groove is made in the axis of the middle part of the lower cover of the box body; the installation groove of the frame oblique beam is an installation groove with a horizontal opening; a limit bulge adaptive to the arc-shaped limit groove is made on the groove bottom of the installation groove; and installation for the battery box body and a frame sectional material is realized through embedding for the arc-shaped limit groove and the limit bulge; and one or more grooves arranged along the length direction of the arc-shaped limit groove are formed in the arc-shaped limit groove, a U-shaped spring piece is fixedly installed in each groove through a screw, and the two ends of each U-shaped spring piece are abutted against the limit bulge of the limit bulge of the installation groove.

Moreover, the frame oblique beam is made of a hollow sectional material, an assembly cavity is formed on the upper part of the hollow sectional material, and a wiring cavity is formed on the lower part of the hollow sectional material.

Moreover, a the wiring cavity of the hollow sectional material is composed of three cavities with different shapes so as to enhance the strength of the hollow sectional material, and the three cavities are substantially in triangle shapes; among the three cavities, the one of corresponding to the limit bulge is larger than the other two.

Moreover, five groups of battery supports arranged along the length direction of the lower cover are arranged on the lower cover in the battery box body, and eight battery packs connected through nickel straps are fixed on each group of the battery supports.

Moreover, an electric quantity display board and a switch button for controlling turn-on and turn-off of the batteries are arranged on the upper cover of the battery box body, and a battery protection board connected with the electric quantity display board through a signal wire is arranged in the battery box body.

The present invention has the advantages and beneficial effects:
By designing the traditional form of completely embedding the battery box into the installation groove to be a form of embedding the limit bulge made on the groove bottom of the installation groove onto the bottom of the battery box, movement ranges during installation and taking-out for the battery box are greatly reduced, so that installation and detachment for the batteries are not limited by the frame cross beam, and are more convenient; and meanwhile, a design for a frame is also not limited by installation and taking for the battery box, so that the design space of the frame is more free, and the requirements of performance and appearance are met.
By additionally installing the U-shaped spring pieces at the bottom of the battery box, when the batteries are taken, the key needs to be rotated to retreat the bolt at first, and at this moment, the U-shaped spring pieces act to bounce the battery box, so that taking-out for the battery box is facilitated.

The installation structure for the lithium-ion battery box of the electric vehicle, which is disclosed by the present invention, is scientific and reasonable in structural design, has the advantages of being simple in structure, convenient in disassembly and assembly, beneficial to frame design, high in aesthetics, and capable of meeting the use needs of users, and has high innovativeness.

### DESCRIPTION OF THE DRAWINGS

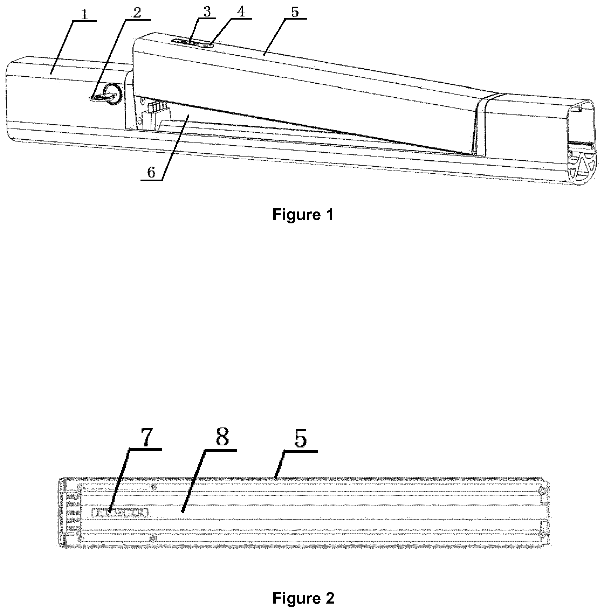

Figure 1 is a structural diagram of the present invention;
Figure 2 is an upward view of the battery box body of the present invention;

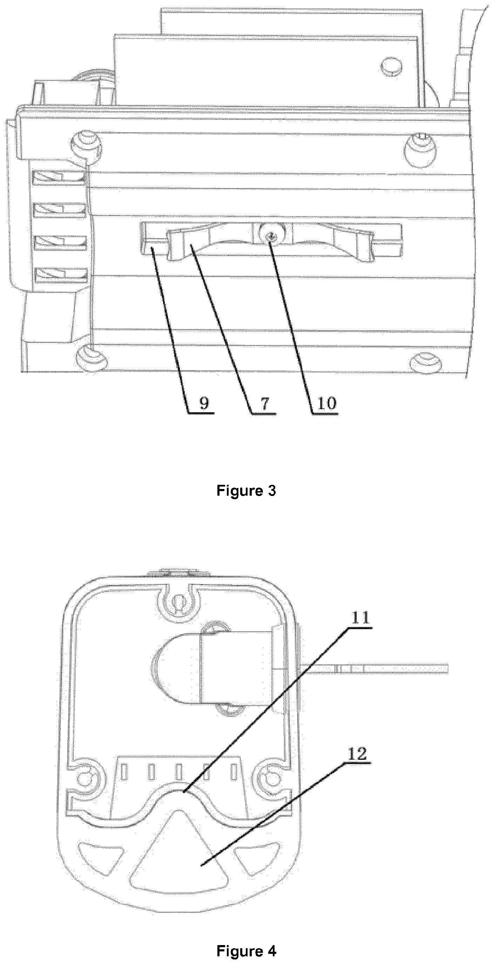

Figure 3 is a partial enlarged drawing (omitting a side plate and the upper cover) of the bottom of the battery box body of the present invention;
Figure 4 is a left view of the present invention;

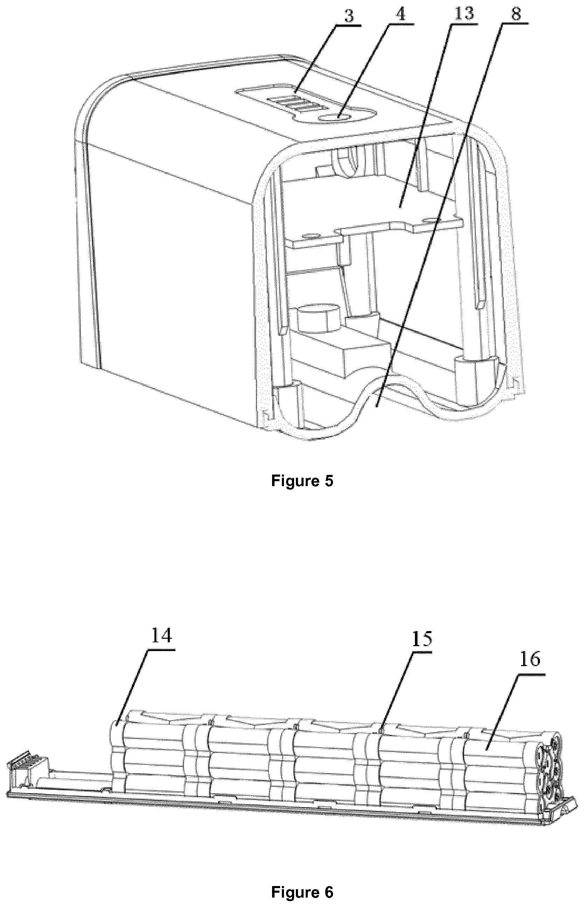

Figure 5 is a section view of the battery box body of the present invention; and
Figure 6 is a structural diagram of assembly for the battery packs of the present invention.

### Marks of the attached drawings

1-frame oblique beam, 2-key, 3-electric quantity display board, 4-switch button, 5-battery box body, 6-installation groove, 7-U-shaped spring piece, 8-arc-shaped limit groove, 9-groove, 10-screw, 11-limit bulge, 12-wiring cavity, 13-battery protection board, 14-battery support, 15-nickel strap, 16-battery.

### DETAILED DESCRIPTION

The present invention is further detailed below through specific embodiments. The following embodiments are only descriptive, not definitive, and are not intended to define the protection scope of the present invention.

An installation structure for a lithium-ion battery box of an electric vehicle comprises a battery box body 5 and a frame oblique beam 1, wherein the box body is composed of an upper cover, a lower cover, end covers and sidewalls; the upper cover and the lower cover are vertically arranged in parallel; the end covers are arranged at a left end and a right end of each of the upper cover and the lower cover; the sidewalls are arranged at a front end and a rear end of each of the upper cover and the lower cover; a jack is made in the end cover at the left end of the battery box body; an installation groove 6 is made in the frame oblique beam; a bolt driven through a key 2 is arranged at one side of the left end of the installation groove; and locking fixation between the battery box body and the frame oblique beam is realized by inserting the bolt into the jack. The installation structure for the lithium-ion battery box of the electric vehicle has the innovations that: the installation groove is an installation groove with a horizontal opening; an upwards-bulged arc-shaped limit groove 8 is made in the axis of the middle part of the lower cover of the box body; a limit bulge 11 adaptive to the arc-shaped limit groove is made on the groove bottom of the installation groove; and installation for the battery box body and a frame sectional material is realized through embedding for the arc-shaped limit groove and the limit bulge.

One or more grooves 9 arranged along the length direction of the arc-shaped limit groove are formed in the arc-shaped limit groove, a U-shaped spring piece is fixedly installed in each groove through a screw, and the two ends of each U-shaped spring piece are abutted against the limit bulge of the limit bulge of the installation groove.

The frame oblique beam is made of a hollow sectional material. An assembly cavity is formed on the upper part of the hollow sectional material. A wiring cavity 12 is formed on the lower part of the hollow sectional material. The wiring cavity is composed of three cavities with different shapes so as to enhance the strength of the hollow sectional material.

Five groups of battery supports 14 arranged along the length direction of the lower cover are arranged on the lower cover in the battery box body, and eight battery packs 16 connected through nickel straps 15 are fixed on each group of the battery supports.

An electric quantity display board 3 and a switch button 4 for controlling turn-on and turn-off of the are arranged on the upper cover of the battery box body, and a battery protection board 13 connected with electric quantity display board through a signal wire is arranged in the battery box body.

According to the installation structure for the lithium-ion battery box of the electric vehicle in the present invention, by designing the traditional form of completely embedding the battery box into the installation groove to be a form of embedding the limit bulge made on the groove bottom of the installation groove onto the bottom of the battery box, movement ranges during installation and taking-out for the battery box are greatly reduced, so that installation and detachment for the batteries are not limited by the frame cross beam, and are more convenient; and meanwhile, a design for a frame is also not limited by installation and taking for the battery box, so that the design space of the frame is more free, and the requirements of performance and appearance are met. By additionally installing the U-shaped spring pieces at the bottom of the battery box, when the batteries are taken, the key needs to be rotated to retreat the bolt at first, and at this moment, the U-shaped spring pieces act to bounce the battery box, so that taking-out for the battery box is facilitated. By designing the frame oblique beam to be of a hollow structure, wiring of the whole vehicle is facilitated, so that the appearance of the whole vehicle is more order and beautiful. By additionally installing the electric quantity display board with an electric quantity display function on the battery box, connecting the electric quantity display board with the battery protection board through the signal wire, and controlling through a communication protocol, the electricity utilization conditions of the batteries can be displayed by the electric quantity display board in real time, so that a driver can charge according to the use conditions of the batteries, and ensure the normal use. When in use, if the switch button is pressed for long (10s), the electric quantity display board sends a turn-on command to the battery protection board to turn on the batteries; and if the switch is lightly touched, the batteries send the current electric quantities to the electric quantity display board to display the electric quantities.

## Claims

1. An installation structure for a lithium-ion battery box of an electric vehicle, comprising a battery box body (5) and a frame oblique beam (1), wherein the box body (5) is composed of an upper cover and a lower cover; the upper cover and the lower cover are vertically arranged in parallel; a jack is made in the front end of the battery box body (5); an installation groove (6) is made in the frame oblique beam (1); a front battery box base is installed in the front installation groove (6); a bolt driven through a key (2) is arranged at one side of the left end of the installation groove (6); and locking fixation between the battery box body (5) and the frame oblique beam (1) is realized by inserting the bolt into the jack;
an upwards-bulged arc-shaped limit groove (8) is made in the axis of the middle part of the lower cover of the box body (5); the installation groove (6) of the frame oblique beam (1) is an installation groove (6) with a horizontal opening; a limit bulge (11) adaptive to the arc-shaped limit groove (8) is made on the groove bottom of the installation groove (6); and installation for the battery box body (5) and a frame sectional material is realized through embedding for the arc-shaped limit groove (8) and the limit bulge (11); **characterized in that** one or more grooves (9) arranged along the length direction of the arc-shaped limit groove (8) are formed in the arc-shaped limit groove (8), a U-shaped spring piece (7) is fixedly installed in each groove (9) through a screw (10), and the two ends of each U-shaped spring piece (7) are abutted against the limit bulge (11) of the installation groove (6).

2. -The installation structure for the lithium-ion battery box of the electric vehicle according to claim 1, **characterized in that**: the frame oblique beam (1) is made of a hollow sectional material; an assembly cavity is formed on the upper part of the hollow sectional material; and a wiring cavity (12) is formed on the lower part of the hollow sectional material.

3. The installation structure for the lithium-ion battery box of the electric vehicle according to claim 2, **characterized in that**: the wiring cavity (12) is composed of three cavities with different shapes so as to enhance the strength of the hollow sectional material, and the three cavities are substantially in triangle shapes; among the three cavities, the one of corresponding to the limit bulge (11) is larger than the other two.

4. The installation structure for the lithium-ion battery box of the electric vehicle according to claim 1, **characterized in that**: five groups of battery supports (14) arranged along the length direction of the lower cover are arranged on the lower cover in the battery box body (5), and eight battery packs (16) connected through nickel straps (15) are fixed on each group of the battery supports (14).

5. The installation structure for the lithium-ion battery box of the electric vehicle according to claim 1, **characterized in that**: an electric quantity display board (3) and a switch button (4) for controlling turn-on and turn-off of the batteries are arranged on the upper cover of the battery box body (5), and a battery protection board (13) connected with the electric quantity display board (3) through a signal wire is arranged in the battery box body (5).

## Patentansprüche

1. Installationsstruktur für einen Lithium-Ionen-Batteriekasten eines Elektrofahrzeugs mit einem Batteriekastenkörper (5) und einem Rahmenschrägbalken (1), wobei der Kastenkörper (5) durch eine obere Abdeckung und eine untere Abdeckung ausgebildet ist; und wobei die obere Abdeckung und die untere Abdeckung vertikal zueinander parallel angeordnet sind; und wobei eine Buchse im vorderen Ende des Batteriekastenkörpers (5) angebracht ist; und wobei eine Installationsrille (6) in dem Rahmenschrägbalken (1) vorgesehen ist; und wobei eine vordere Batteriekastenbasis in der vorderen Installationsrille (6) installiert ist; und wobei ein durch einen Schlüssel (2) angetriebener Bolzen an einer Seite des linken Endes der Installationsrille (6) angeordnet ist; und wobei eine Verriegelungsfixierung zwischen dem Batteriekastenkörper (5) und dem Rahmenschrägbalken (1) wird durch Einführen des Bolzens in die Buchse realisiert wird; wobei eine nach oben gewölbte bogenförmige Begrenzungsrille (8) in der Achse des Mittelteils der unteren Abdeckung des Kastenkörpers (5) vorgesehen ist; und wobei die Installationsrille (6) des Rahmenschrägbalkens (1) eine Installationsrille (6) mit einer horizontalen Öffnung ist; und wobei an der Rillenunterseite der Installationsrille (6) eine an die bogenförmige Begrenzungsrille (8) anpassbare Begrenzungswölbung (11) ausgebildet ist; und wobei die Installation für den Batteriekastenkörper (5) und ein Rahmenprofilmaterial durch Einbetten für die bogenförmige Begrenzungsrille (8) und die Begrenzungswölbung (11) realisiert sind; **dadurch gekennzeichnet, dass** eine oder mehrere entlang der Längsrichtung der bogenförmigen Begrenzungsrille (8) vorgesehene Rillen (9) in der bogenförmigen Begrenzungsrille (8) ausgebildet sind, wobei ein U-förmiges Federstück in jeder Rille (9) durch eine Schraube (10) fest installiert ist und die beiden Enden des jeweiligen U-förmigen Federstücks (7) die Begrenzungswölbung (11) der Installationsrille (6) eng berühren.

2. Installationsstruktur für den Lithium-Ionen-Batteriekasten des Elektrofahrzeugs nach Anspruch 1, **dadurch gekennzeichnet, dass** der Rahmenschrägbalken (1) aus einem hohlen Profilmaterial hergestellt ist; wobei ein Montagehohlraum an dem oberen Teil des hohlen Profilmaterials ausgebildet ist; und wobei ein Verdrahtungshohlraum (12) an dem unteren Teil des hohlen Profilmaterials ausgebildet ist.

3. Installationsstruktur für den Lithium-Ionen-Batteriekasten des Elektrofahrzeugs nach Anspruch 2, **dadurch gekennzeichnet, dass** der Verdrahtungshohlraum (12) durch drei Hohlräume mit unterschiedlichen Formen ausgebildet ist, um die Festigkeit des hohlen Profilmaterials zu verbessern, wobei die drei Hohlräume im Wesentlichen in Dreiecksformen geformt sind; und wobei unter den drei Hohlräumen der der Begrenzungswölbung (11) zugeordnete Hohlraum größer als die anderen beiden Hohlräume ist.

4. Installationsstruktur für den Lithium-Ionen-Batteriekasten des Elektrofahrzeugs nach Anspruch 1, **dadurch gekennzeichnet, dass** fünf Gruppen von Batterieträgern (14), die entlang der Längsrichtung der unteren Abdeckung angeordnet sind, an der unteren Abdeckung in dem Batteriekastenkörper (5) angeordnet sind und acht durch Nickelbänder (15) verbundene Batteriepacks (16) an jeder Gruppe der Batterieträger (14) befestigt sind.

5. Installationsstruktur für den Lithium-Ionen-Batteriekasten des Elektrofahrzeugs nach Anspruch 1, **dadurch gekennzeichnet, dass** eine Anzeigetafel (3) für die Kapazität und ein Schaltknopf (4) zum Steuern des Ein- und Ausschaltens der Batterien an der oberen Abdeckung des Batteriekastenkörpers (5) angeordnet sind und eine durch einen Signaldraht mit der Anzeigetafel (3) für die Kapazität verbundene Batterie-Schutzplatte (13) in dem Batteriekastenkörper (5) angeordnet ist.

## Revendications

1. Une structure d'installation pour une boîtier de batterie lithium-ion pour véhicule électrique, comprenant un corps de boîtier de batterie (5) et un cadre de poutre oblique (1), où le corps de boîtier est composé d'une couverture supérieure et une couverture inférieure; la couverture supérieure et la couverture inférieure sont verticalement agencées en parallèle; un jack est disposé dans l'extrémité avant du corps de boîtier de batterie (5); une rainure d'installation (6) est disposé dans le cadre de poutre oblique; une base avant de boîtier de batterie est installé dans la partie avant de la rainure d' installation (6) ;un verrou entraîné par un clé est disposé à un côté de l'extrémité gauche de la rainure d'installation (6) ; et la fixation de verrouillage entre le corps de boîtier de batterie(5) et le cadre de poutre oblique(1) est réalisée en insérant le verrou dans le jack;
une rainure limite en forme d'arc (8) renflé ver le haut est disposée dans l'axe de la partie milieu de la couverture inférieure de corps de batterie (5); la rainure d'installation (6) du cadre de poutre oblique (1) est une rainure d'installation (6) avec l'ouverture horizontale; un renflement limite (11) adapté à la rainure limite en forme d'arc (8) est disposé sur la base de la rainure d'installation (6); et l'installation pour le corps de boîtier de batterie (5) et un profilé de cadre est réalisée par emboîter la ranuire limite en forme d'arc (8) dans le renflement limite (11);
**caractérisée en ce que** l'une ou plusieurs des rainures (9) disposés le long de la direction de longueur de l'encoche en forme d'arc (8) sont formés dans l'encoche en forme d'arc (8), un ressort à lames en forme de U (7) est installé fixement dans chaque rainure (9) par une vis (10), et les deux extrémités de chaque ressort à lames en forme de U (7) sont aboutées contre le renflement limite (11) de la rainure d'installation (6).

2. La structure d'installation pour la boîtier de batterie Lithium-Ion pour véhicule électrique selon revendication 1, **caractérisée en ce que**: le cadre de poutre oblique (1) est faite d'un profilé creux; une cavité d'assemblage est formée dans la partie supérieure du profilé creux; et une cavité de câblage (12) est formé dans la partie inférieure du profilé creux.

3. La structure d'installation pour la boîtier de Batterie Lithium-Ion pour véhicule électrique selon revendication 2, **caractérisée en ce que**:la cavité de câblage (12) est composé de trois cavités avec différentes formes de manière à renforcer la résistance du profilé creux, et les trois cavités sont substantiellement en formes triangulaires; parmi les trois cavités, celui de correspondant au renflement limite (11) est plus grand que les deux autres.

4. La structure d'installation pour la boîtier de Batterie Lithium-Ion pour véhicule électrique selon revendication 1, **caractérisée en ce que**: cinq groupes de supports de batterie (14) agencés le long de la direction de longueur de la couverture inférieure sont disposés sur cette couverture inférieure du corps de boîte de batterie (5), et huit piles de batterie (16) connectées par des sangles de nickel (15) sont fixées sur chaque support de batterie (14).

5. La structure d'installation pour la boîtier de Batterie Lithium-Ion pour véhicule électrique selon revendication 1, **caractérisée en ce que**:un panneau d'affichage pour la quantité d'électricité(3) et un bouton (4) pour contrôler l'allumage et l'extinction des batteries sont disposés sur la couverture supérieure du corps de boîtier de batterie (5) et un panneau de protection de la batterie (13) connecté avec le panneau d'affichage pour la quantité d'électricité (3) par un fil de signal est disposé dans le corps de boîtier de batterie (5).
